**Europäisches Patentamt**

**European Patent Office**

**Office européen des brevets**

(19)

(11) Veröffentlichungsnummer: **0 062 222**
**B1**

(12) **EUROPÄISCHE PATENTSCHRIFT**

(45) Veröffentlichungstag der Patentschrift:
**10.10.84**

(51) Int. Cl.³: **C 09 D 3/80,** C 08 G 18/80

(21) Anmeldenummer: **82102374.4**

(22) Anmeldetag: **23.03.82**

(54) **Pulverförmiges Überzugsmittel und seine Verwendung.**

(30) Priorität: **31.03.81 DE 3112697**

(43) Veröffentlichungstag der Anmeldung:
**13.10.82 Patentblatt 82/41**

(45) Bekanntmachung des Hinweises auf die Patenterteilung:
**10.10.84 Patentblatt 84/41**

(84) Benannte Vertragsstaaten:
**BE DE FR GB IT NL.**

(56) Entgegenhaltungen:
**BE - A - 652 949**
**DE - A - 2 460 785**

(73) Patentinhaber: **BASF Aktiengesellschaft,
Carl-Bosch-Strasse 38, D-6700 Ludwigshafen (DE)**

(72) Erfinder: **Gimpel, Juergen, Dr., Osloer Weg 44,
D-6700 Ludwigshafen (DE)**
Erfinder: **Feuerherd, Karl-Heinz, Dr., c/o BASF Japan Ltd
C.P.O. Box 1757, Tokyo 100-91 (JP)**

BUNDESDRUCKEREI BERLIN

## Beschreibung

Die vorliegende Erfindung betrifft ein pulverförmiges Überzugsmittel auf der Basis eines Bindemittelgemisches aus einem Polyacrylat mit verkappten Isocyanatgruppen, einem bei Raumtemperatur festen $\alpha$, $\omega$-Diol und Tri- oder Polyol sowie seine Verwendung für das elektrostatische Pulverbeschichten und das Wirbelsintern.

Bindemittel für das elektrostatische Pulversprühverfahren auf der Basis von verkappten Isocyanatgruppen enthaltenden Polyacrylaten sind bereits aus der DE-OS 24 60 785 bekannt. Dort wird ein selbstvernetzender Pulverlack beschrieben, dessen Polyacrylat neben den verkappten Isocyanatgruppen noch Hydroxylfunktionen hat. Derartige selbstvernetzende Pulverlacke haben, da sie über keine niedermolekularen Begleitstoffe verfügen, einen schlechten Verlauf. In der DE-OS 24 60 785 werden auch fremdvernetzende Lacke beschrieben und als niedermolekulare Hydroxylkomponente Hydroxypivalinsäureneopentylglykolester und Pentaerythrit genannt. Setzt man diese Alkohole entweder alleine oder als Mischung ein, erhält man Pulverlacke, die sehr spröde Lackfilme ergeben. Die Erichsen-Tiefung (DIN 53 156) beträgt weniger als 1 mm und ist daher unzureichend.

Aufgabe der vorliegenden Erfindung ist es, pulverförmige Überzugsmittel aufzuzeigen, die diese Nachteile nicht mehr aufweisen.

Gegenstand der vorliegenden Erfindung ist ein pulverförmiges Überzugsmittel auf Basis eines Bindemittelgemisches aus einem Mischpolymerisat mit verkappten Isocyanatgruppen und bei Raumtemperatur festen, Di- und Tri- oder Polyolen, das dadurch gekennzeichnet ist, daß das Bindemittelgemisch besteht aus

(A) 50 bis 90 Gew.-% eines Mischpolymerisates aus

(I.) 30 bis 70 Gew.-% mindestens eines Esters der Acrylsäure oder Methacrylsäure mit 1 bis 6 Kohlenstoffatome enthaltenden Monoalkoholen, dessen Homopolymer eine Glastemperatur oberhalb von 35° C aufweist, und/oder Acrylnitril,

(II.) 20 bis 45 Gew.-% eines Addukts aus Vinylisocyanat und einem CH-, OH- oder NH-aciden Verkappungsmittel und

(III.) 0 bis 50 Gew.-% mindestens einer weiteren von den unter (I.) und (II.) genannten verschiedenen hydroxyl- und carboxylgruppenfreien, mit den Komponenten (I) und (II) copolymerisierbaren ethylenisch ungesättigten Verbindungen

mit der Maßgabe, daß die Summe der unter (I.) bis (III.) genannten Prozentzahlen 100 ist;

(B) 7 bis 30 Gew.-% eines $\alpha$, $\omega$-Diols mit acht bis fünfzehn Kohlenstoffatomen in der Kette und einem Schmelzpunkt zwischen 60 und 150° C, und

(C) 1 bis 20 Gew.-% eines Tri- oder Polyols mit einem Schmelzpunkt zwischen 60 und 150° C,

mit der Maßgabe, daß die Summe der unter (A) bis (C) genannten Prozentzahlen des Bindemittelgemisches 100 ist.

Gegenstand der Erfindung ist außerdem die Verwendung des erfindungsgemäßen pulverförmigen Überzugsmittels, gegebenenfalls in Kombination mit Pigmenten, Verlaufsmitteln, Antistatika und/oder Katalysatoren für die Entkappungsreaktion für das elektrostatische Pulverbeschichten und/oder das Wirbelsinterverfahren.

Zu den Aufbaukomponenten des Bindemittelgemisches ist im einzelnen folgendes auszuführen:

(A) Das Mischpolymerisat (A) enthält als Komponent (I) 30 bis 70, vorzugsweise 40 bis 60 Gew.-% mindestens eines Acrylsäure- oder Methacrylsäureesters mit 1 bis 6 Kohlenstoffatome enthaltenden Monoalkoholen, dessen Homopolymer eine Glastemperatur oberhalb von 35° C aufweist, und/oder Acrylnitril einpolymerisiert.

Derartige geeignete Ester der Acrylsäure oder Methacrylsäure sind beispielsweise Methacrylsäuremethylester, t.-Butylacrylat und Methacrylsäureethylester, vorzugsweise Methacrylsäuremethylester.

Als Komponente (II) enthält das Mischpolymerisat (A) 20 bis 45, vorzugsweise 25 bis 40 Gew.-% eines Addukts aus Vinylisocyanat und einem CH-, OH- oder NH-aciden Verkappungsmittel einpolymerisiert. Als Verkappungsmittel zur Herstellung der Komponente (II) können beispielsweise Monophenole wie Phenol, Kresol, Trimethylphenol, primäre Alkohole oder sekundäre Alkohole wie Isopropanol oder Cyclohexanol, tertiäre Alkohole, wie t-Butanol oder t-Amylalkohol, leicht enolisierbare Verbindungen, wie Acetessigester, Acetylaceton, Malonsäurederivate, wie Malonsäurediester mit 1 bis 8 Kohlenstoffatomen in der Alkoholkomponente, Malonsäuredinitril, sekundäre aromatische Amine wie N-Methylanilin, N-Methyltoluidin oder N-Phenyltoluidin, Imide, wie Succinimid und Phthalimid, Lactame wie $\varepsilon$-Caprolactam, $\varepsilon$-Valerolactam oder Laurinlactam, sowie Oxime wie Acetonoxim, Butanonoxim und Cyclohexanonoxim und aromatische Triazole wie Triazabenzol eingesetzt werden. Besonders bevorzugt als Verkappungsmittel der Vinyl-isocyanate sind t-Butanol, Cyclohexanol, $\varepsilon$-Caprolactam und Methylethylketonoxim.

2

Die Herstellung des verkappten Vinylisocanats kann z. B. nach einer Analogievorschrift in Houben-Weyl, Methoden der organischen Chemie, Band 14/2, (1963), Seite 61 bis 70 erfolgen und kann vorzugsweise in Gegenwart von Lösungsmittel durchgeführt werden. Außerdem können Katalysatoren für die Verkappungsreaktion, wie z. B. Dibutylzinndilaurat mitverwendet werden. Bei der Umsetzung des Vinylisocyanats mit dem Verkappungsmittel werden im allgemeinen etwa äquimolare Mengen eingesetzt. Ein Überschuß des Isocyanats sollte vermieden werden, da dies später zu Vernetzungen Anlaß geben könnte.

Als Komponente (III) kann das Mischpolymerisat (A) 0 bis 50, vorzugsweise 5 bis 40 Gew.-% mindestens einer weiteren von (I) und (II) verschiedenen carboxyl- und hydroxylgruppenfreien, mit den Komponenten (I) und (II) copolymerisierbaren ethylenisch ungesättigten Verbindung einpolymerisiert enthalten, wie z. B. Dicyclopentadien oder Vinylester von Carbonsäuren mit 2 bis 12 Kohlenstoffatomen und/oder eines von (I) verschiedenen Acrylsäurealkylester mit 1 bis 12 Kohlenstoffatomen enthaltenden Monoalkoholen, wie Methyl-, Ethyl-, Propyl-, n-Butyl-, Isobutyl-, 2-Ethylhexyl- oder Laurylacrylat und/oder eines Methacrylsäurealkylesters mit 3 bis 12 Kohlenstoffatomen enthaltenden Monoalkoholen. Die Glastemperaturen der Homopolymerisate der als Komponente (III) in Frage kommenden Methacrylate und Acrylate liegen unter 35° C.

Die Summe der unter (I) bis (III) genannten Prozentzahlen ist jeweils 100.

Bevorzugt als Mischpolymerisate sind Acrylharze aus Methacrylsäuremethylester, n-Butylacrylat und mit Caprolactam verkapptem Vinylisocyanat.

Das Mischpolymerisat (A) ist im erfindungsgemäßen Bindemittelgemisch in einer Menge von 50 bis 90, vorzugsweise 70 bis 85 Gew.-% enthalten.

Die Herstellung der Copolymerisate (A) erfolgt im allgemeinen nach den bekannten Verfahren der Substanz-, Lösungs, Dispersions- oder Perlpolymerisation oder in einer geeigneten Kombination von Substanz- und Perlpolymerisation wie sie z. B. in den Methoden der organischen Chemie, Houben-Weyl, 4. Auflage, Band 14/1, Seite 24 bis 556 (1961) beschrieben sind.

Wird in Lösung polymerisiert, so können die üblicherweise für Acrylatharze geeigneten organischen Lösungsmittel, wie aromatische Kohlenwasserstoffe, z. B. Toluol oder Xylol, Ether, wie Dioxan oder Tetrahydrofuran oder Ester wie Essigsäureethylester oder deren Gemische verwendet werden.

Als Initiatoren für die radikalische Polymerisation eignen sich die üblicherweise verwendeten Percarbonate, Perester, Azocarbonsäureamide oder -nitrile bzw. deren Mischungen. Als Molekulargewichtsregler können die üblichen Schwefelverbindungen verwendet werden, wie Merkatoethanol oder t-Dodecylmerkaptan, deren Mengen im allgemeinen zwischen 0,5 und 4 Gew.-%, bezogen auf das Acrylatharz, schwanken können.

Die Copolymerisatlösungen werden zweckmäßigerweise durch Vakuumdestillation, Sprühtrocknung oder Ausfällen in einem Lösungsmittel anderer Polarität vom ursprünglichen Lösungsmittel befreit.

Damit die Pulver bei Zimmertemperatur, 40° C oder 50° C nicht zusammenklumpen, sondern noch rieselfähig sind, soll die Glastemperatur des Mischpolymerisats (A) 35 bis 80° C betragen (gemessen mit Hilfe eines Differentialthermoanalysators).

Das durchschnittliche Molekulargewicht der Mischpolymerisate (A) liegt im allgemeinen zwischen 1500 und 10 000, gemessen mittels Dampfdruckosmometer. Die K-Werte der Mischpolymerisate betragen im allgemeinen 14 bis 30 ( nach Fikentscher, Cellulose Chemie 13, 58 (1932).

(B) Als $\alpha,\omega$-Diol mit 8 bis 15 C-Atomen in der Kette und einem Schmelzpunkt zwischen 60 und 150° C eignen sich beispielsweise Octandiol, Dekandiol, Tridecandiol, Tetradecandiol, vorzugsweise Dekandiol (1,10) und Tridecandiol). Komponente (B) ist im erfindungsgemäßen Bindemittelgemisch in einer Menge von 7 bis 30, vorzugsweise 14 bis 25 Gew.-% enthalten.

(C) Als Tri- oder Polyol mit einem Schmelzpunkt zwischen 60 und 150° C eignen sich zum Beispiel Triole mit 6 bis 15 Kohlenstoffatomen bzw. entsprechende niedermolekulare Polyole, vorzugsweise Trimethylolbutan.

Komponente (C) ist im erfindungsgemäßen Bindemittelgemisch in Mengen von 1 bis 20, vorzugsweise 2 bis 7 Gew.-% enthalten.

Die Komponenten (B) und (C) sind auf die Komponente (A) im allgemeinen so abgestimmt, daß das molare Verhältnis von verkappten NCO-Gruppen zu OH-Gruppen 1 : 1,5 bis 1 : 2,5, vorzugsweise 1 : 2 beträgt. Das Verhältnis der Komponenten (B) und (C) untereinander ist vorteilhafterweise derart, daß die Komponente (B) 60—95% vorzugsweise 68 bis 75% der OH-Gruppen stellt. Verzichtet man ganz auf die Komponente (C), sind die Lacke nicht ausreichend vernetzt, d. h. ihre Erichsentiefung ist kleiner als 1 mm. Sinkt das molare Verhältnis der verkappten NCO-Gruppen zu den OH-Gruppen unter 1 : 1,5, werden also weniger Hydroxylfunktionen eingesetzt, erhält man ebenfalls unzureichend vernetzte Lackfilme.

Zur Erzielung bestimmter Effekte können die Bindemittelpulver noch mit Hilfsmitteln kombiniert werden.

Um den Überzügen eine geeignete Farbe zu verleihen, können ihnen anorganische Pigmente, wie Titandioxid, Eisenoxid, Chromoxid und Ruß oder organische Pigmente wie Phthalocyaninblau, Phthalocyaningrün und ähnliche zugesetzt werden. Selbstverständlich können auch andere Farbstoffe und Pigmente sowie deren Mischungen verwendet werden.

Weitere Additive wie Verlaufsmittel, Antiblockmittel, Antistatika, Katalysatoren für die Vernetzungsreaktion usw. können ebenfalls mitverwendet werden. Um eine gleichmäßige Verteilung dieser Additive im Pulverlack zu erreichen, kann die Zugabe der Additive schon bei der Herstellung des Mischpolymerisats (A) erfolgen. Mögliche Additive sind ausführlich im »Report on Powder Coating«, 1976, R. H. Chandler Ltd., beschrieben. Dort werden ebenfalls die für die Pulverlackherstellung und den Pulverlackauftrag erforderlichen Verfahrensschritte und Vorrichtungen beschrieben.

Die erfindungsgemäßen Bindemittelgemische bzw. deren Kombinationen mit den genannten Hilfsmitteln werden mittels üblicher Mahlaggregate zweckmäßigerweise auf Teilchengrößen von kleiner als 125 μm gemahlen.

Als zu beschichtende Substrate kommen Metallteile, Glas- und Keramikteile in Frage.

Geeignete Applikationsmethoden für die erfindungsgemäßen Pulverlacke sind z. B. das Flammspritzen, ladungsfreies Aufstreuen auf die zu beschichtenden Werkstücke, vorzugsweise elektrostatisches Pulverspritzen und Wirbelsintern.

Die applizierten erfindungsgemäßen Pulverlacke werden im allgemeinen bei 150 bis 220°C während 5 bis 30 Minuten eingebrannt.

Die erfindungsgemäßen pulverförmigen Überzugsmittel eignen sich z. B. zum Beschichten von Metallteilen wie Autokarosserien, Fensterteilen und ähnlichem und zum Beschichten von nichtmetallischen Oberflächen wie Glas und Keramik. Im unpigmentierten Zustand sind sie auch als Decklack für Metalliclacke nach dem »Dry on wet«-Verfahren zu verwenden. Weiterhin sind sie für die Beschichtung von Haushaltsgeräten, Rohren sowie Geräten der Land- und Forstwirtschaft geeignet.

Die in den folgenden Beispielen genannten Teile und Prozente sind, sofern nicht anders angegeben, Gewichtsteile bzw. Gewichtsprozente.

### Herstellung der Komponente (AII)

#### (AII1) N-Vinylcarbaminsäure-tert.-Butylester

In einem Reaktionsgefäß, versehen mit einem Intensivkühler (mit Kühlsole), Rührer, Thermometer und Zulaufgefäß werden 69 Teile Vinylisocyanat und 70 Teile Ethylacetat vorgelegt. Bei 40°C werden innerhalb von 1 Stunde 174 Teile tert.-Butanol, 73 Teile Ethylacetat und 0,01% Dibutylzinndilaurat zugegeben. Anschließend läßt man noch 10 Stunden bei 40°C nachreagieren. Es entsteht eine hellgelbe Lösung.

Gehalt an verkapptem Isocyanat in der Lösung: 14,7%; Feststoffgehalt: ca. 50%.

#### (AII2) N-Vinylcarbaminsäure-cyclohexylester

In einem Reaktionsgefäß werden 69 Teile Vinylisocyanat und 89,5 Teile Ethylacetat vorgelegt und auf 40°C aufgeheizt. Dazu wird innerhalb von 1 Stunde eine Mischung aus 110 Teilen Cyclohexanol und 89,5 Teilen Ethylacetat (0,02% Dibutylzinndilaurat als Katalysator) gegeben. Nachreaktionszeit: 2 Stunden bei 40°C. Man erhält eine hellgelbe Lösung, aus der sich beim Abkühlen das Reaktionsprodukt in Form von Kristallen abscheidet.

Gehalt an verkapptem Isocyanat in der Lösung: 11,7%, Feststoffgehalt: ca. 50%.

#### (AII3) Vinylisocyanat-Caprolactam-Addukt

In einem Reaktionsgefäß werden 113 Teile ε-Caprolactam und 91 Teile Ethylacetat (+0,015% Dibutylzinndilaurat) vorgelegt und auf ca. 50°C aufgeheizt. Dazu wird innerhalb von 1 Stunde eine Mischung aus 69 Teilen Vinylisocyanat und 91 Teilen Ethylacetat zugetropft. Nachreaktionszeit: 5 Stunden. Man erhält eine hellgelbe klare Lösung.

Gehalt an verkapptem Isocyanat in der Lösung: 11,5%, Feststoffgehalt: ca. 50%.

### Herstellung der Mischpolymerisate (A)

#### Harz 1

In einem mit Rührer, Innenthermometer und Rückflußkühler ausgestatteten Polymerisationsgefäß wird unter Stickstoff bei 65°C zu 250 Teilen Ethylacetat gleichmäßig innerhalb von 2 Stunden eine Mischung aus 300 Teilen Methylmethacrylat (=MMA), 300 Teilen der 50%igen Lösung der Komponente (AII3), 150 Teilen Butylacrylat (=BA), 12 Teilen Azobis(2,4 Dimethyl)valeronitril und 6 Teilen t-Dodecylmerkaptan zudosiert. Man läßt 2 Stunden bei 65°C nachpolymerisieren und entfernt dann das Lösungsmittel im Vakuum. Das Polymere besitzt einen K-Wert von 25 und eine Glastemperatur von 48°C.

Die Harze 2, 3 und 4 werden wie bei Harz 1 beschrieben polymerisiert.

Tabelle 1

| Harz Nr. | Monomeraufbau in Gew. Teilen MMA | (All3) (100%ig) | BA | K-Wert 3%ig in Aceton | Glas- temperatur Tg °C |
|---|---|---|---|---|---|
| 2 | 50 | 30 | 20 | 23 | 53 |
| 3 | 50 | 35 | 15 | 26 | 65 |
| 4 | 40 | 40 | 20 | 27 | 58 |

Pulverlacke

Beispiel 1

83 Teile des auf eine Korngröße von 2 mm gemahlenen Harzes 1, 14 Teile Dekandiol, 3 Teile Trimethylolbutan und 1 Teil Verlaufsmittel (Poly-n-butylacrylat; K-Wert: 30) werden nach grober Vermischung in einem Labor-ko-kneter der Firma Buss bei ca. 110° C schmelzhomogenisiert. Die Schmelze wird auf Kühlblechen abgekühlt und auf eine Korngröße von kleiner 125 μm gemahlen und gesiebt. Das Pulver wird mit einer handelsüblichen Spritzanlage bei einer Spannung von 80 KV elektrostatisch auf entfettete Eisenbleche gesprüht. Die Lacke werden 30 Minuten bei 180° C eingebrannt. Die Filmeigenschaften sind der Tabelle 3 zu entnehmen.

Die Pulverlackbeispiele 2, 3 und 4 werden wie bei Beispiel 1 beschrieben hergestellt.

Tabelle 2

| Beispiel Nr. | Harz Nr. | Bindemittelgemisch Mengenverhältnis in Teilen Harz | Dekandiol | Trimethylol- butan | Verlaufs- mittel |
|---|---|---|---|---|---|
| 2 | 2 | 80 | 16 | 4 | 1% |
| 3 | 3 | 77 | 18 | 5 | 1% |
| 4 | 4 | 75 | 20 | 5 | 1% |

Tabelle 3

| | Beispiel 1 | 2 | 3 | 4 |
|---|---|---|---|---|
| Schichtdicke (μm) | 46 | 42 | 44 | 46 |
| Einbrennbedingungen (Min/°C) | 30/180 | 30/180 | 30/180 | 30/180 |
| Pendelhärte (sec) nach DIN 53 157 | 171 | 169 | 169 | 172 |
| Erichsen-Tiefung (mm) nach DIN 53 156 | 9,4 | 9,0 | 8,1 | 7,6 |
| Verlauf*) | 1 | 1 | 1 | 0 |

*) visuelle Beurteilung von 0—5:

0: glatt, ausgespannt, kaum Orangenschalen
5: rauh, nicht ausgespannt, wie Schmirgelpapier

**0 062 222**

**Patentansprüche**

1. Pulverförmiges Überzugsmittel auf Basis eines Bindemittelgemisches aus einem Mischpolymerisat mit verkappten Isocyanatgruppen und bei Raumtemperatur festen Di- und Tri- oder Polyolen, dadurch gekennzeichnet, daß das Bindemittelgemisch besteht aus

(A) 50 bis 90 Gew.-% eines Mischpolymerisats aus

    (I)   30 bis 70 Gew.-% mindestens eines Esters der Acrylsäure oder Methacrylsäure mit 1 bis 6 Kohlenstoffatome enthaltenden Monoalkoholen, dessen Homopolymer eine Glastemperatur oberhalb von 35° C aufweist, und/oder Acrylnitril,

    (II)  20 bis 45 Gew.-% eines Addukts aus Vinylisocyanat und einem CH-, OH- oder NH-aciden Verkappungsmittel und

    (III) 0 bis 50 Gew.-% mindestens einer weiteren von den unter (I) und (II) genannten verschiedenen hydroxyl- und carboxyl-gruppenfreien, mit den Komponenten (I) und (II) copolymerisierbaren ethylenisch ungesättigten Verbindung,

mit der Maßgabe, daß die Summe der unter (I) bis (III) genannten Prozentzahlen 100 ist;

(B) 7 bis 30 Gew.-% eines $\alpha,\omega$-Diols mit 8 bis 15 Kohlenstoffatomen in der Kette und einem Schmelzpunkt zwischen 60 und 150° C und

(C) 1 bis 20 Gew.-% eines Tri- oder Polyols mit einem Schmelzpunkt zwischen 60 und 150° C,

mit der Maßgabe, daß die Summe der unter (A) bis (C) genannten Prozentzahlen des Bindemittelgemisches 100 ist.

2. Verwendung des pulverförmigen Überzugsmittels nach Anspruch 1, gegebenenfalls in Kombination mit Pigmenten, Verlaufsmitteln, Antistatika und/oder Katalysatoren für das elektrostatische Pulverbeschichten.

3. Verwendung des pulverförmigen Überzugsmittels nach Anspruch 1, gegebenenfalls in Kombination mit Pigmenten, Verlaufsmitteln, Antistatika und/oder Katalysatoren für das Wirbelsinterverfahren.


**Claims**

1. A pulverulent coating material based on a binder mixture of a copolymer containing blocked isocyanate groups, and di-, tri- and polyols which are solid at room temperature, wherein the binder mixture consists of

(A) 50 to 90% by weight of a copolymer of

    (I)   30 to 70% by weight of at least one ester of acrylic or methacrylic acid with monoalcohols of 1 to 6 carbon atoms, the homopolymer of which has a glass transition temperature above 35° C, and/or acrylonitrile,

    (II)  20 to 45% by weight of an adduct of vinyl isocyanate and a CH-, OH- or NH-acidic blocking agent, and

    (III) 0 to 50% by weight of at least one further ethylenically unsaturated compound which is different from those specified under (I) and (II), is free of hydroxyl and carboxyl groups, and is copolymerizable with components (I) and (II),

with the proviso that the sum of the percentages specified under (I) to (III) is 100;

(B) 7 to 30% by weight of an $\alpha,\omega$-diol having 8 to 15 carbon atoms in the chain and a melting point of from 60 to 150° C; and

(C) 1 to 20% by weight of a triol or polyol having a melting point of from 60 to 150° C,

with the proviso that the sum of the percentages of the components of the binder mixture specified under (A) to (C) is 100.

2. The use of the pulverulent coating material as claimed in claim 1, alone or in combination with pigments, levelling agents, antistatic agents and/or catalysts, for electrostatic powder coating.

3. The use of the pulverulent coating material as claimed in claim 1, alone or in combination with pigments, levelling agents, antistatic agents and/or catalysts, for fluidized bed coating.

6

**Revendications**

1. Matière de revêtement pulvérulente à base d'un mélange de liants composé d'un polymérisat mixte à groupes isocyanate bloqués et de di- et tri- ou poly-ols solides à la température ordinaire, caractérisée en ce que mélange de liants est composé de

(A) 50 à 90% en poids d'un polymérisat mixte de

    (I) 30 à 70% en poids d'au moins un ester de l'acide acrylique ou de l'acide méthacrylique et de monols en $C_1$ à $C_6$, dont l'homopolymère possède une température de transition vitreuse supérieure à 35°C, et (ou) d'acrylonitrile;

    (II) 20 à 45% en poids d'un produit d'addition d'isocyanate de vinyle et d'un agent de blocage CH-, OH- ou NH-acide;

    (III) 0 à 50% en poids d'au moins un autre composé à insaturation éthylénique, exempt de groupes hydroxyle et carboxyle, différent des composés mentionnés sub (I) et (II) et copolymérisable avec les composants (I) et (II),

la somme des pourcentages des composants (I) à (III) étant égale à 100;

(B) 7 à 30% en poids d'un $\alpha,\omega$-diol, dont la chaîne comporte 8 à 15 atomes de carbone et dont le point de fusion se situe entre 60 et 150°C;

(C) 1à 20% en poids d'un tri- ou poly-ol avec un point de fusion de 60 à 150°C,

la somme des pourcentages des composants (A) à (C) du mélange de liants étant égale à 100.

2. Utilisation d'une matière de revêtement pulvérulente suivant la revendication 1, éventuellement en combinaison avec des pigments, des agents d'étalement, des substances anti-statiques et (ou) des catalyseurs, pour la réalisation de revêtements par dépôt électrostatique d'une poudre.

3. Utilisation d'une matière de revêtement pulvérulente suivant la revendication 1, éventuellement en combinaison avec des pigments, des agents d'étalement, des substances anti-statiques et (ou) des catalyseurs, pour la réalisation de revêtements par la technique de concrétion tourbillonnaire.